# EUROPÄISCHE PATENTANMELDUNG

(11) **EP 2 387 966 A1**
(43) Veröffentlichungstag der Anmeldung: **23.11.2011**
(21) Anmeldenummer: 10162913.7
(22) Anmeldetag: 17.05.2010
(51) Int. Cl.: A61C 1/05

(54) **Medizinisches, insbesondere zahnärztliches, Handstück**

(71) Anmelder: W & H Dentalwerk Bürmoos GmbH, 5111 Bürmoos (AT)
(72) Erfinder: Brandner, Jürgen, 5113, Sankt Georgen (AT); Rothenwänder, Michael, 5112, Lamprechtshausen (AT)

(57) **Zusammenfassung**

Die vorliegende Erfindung offenbart ein medizinisches, insbesondere zahnärztliches, Handstück (1) mit einer Griffhülse (2), einem Handstückkopf (3) sowie Mittel zum Verspannen der Griffhülse (2) mit dem Handstückkopf (3) mit einem Verbindungselement (4) und einem in der Griffhülse (2) vorgesehenen und mit dem Verbindungselement verbindbaren Spannelement (5), wobei der Handstückkopf (3) ein Kopfgehäuse (6) und eine sich daran anschließende hohle Verbindungshülse (7) zum Verbinden des Handstückkopfes (3) mit der Griffhülse (2) aufweist, das Verbindungselement (4) ein Treibluftrohr aufweist, welches sich von dem Spannelement (5) bis in den Handstückkopf (3) erstreckt, und das sich in den Handstückkopf (3) erstreckende Ende des Treibluftrohrs (4) einen Außendurchmesser (D) aufweist, welcher größer als der Innendurchmesser (H) der hohlen Verbindungshülse (7) des Handstückkopfes (3) ist, so dass das Treibluftrohr (4) den Handstückkopf (3) kontaktiert und den Handstückkopf (3) mit der Griffhülse (2) über das in der Griffhülse (2) gegen einen Anschlag (8) gelagerte Spannelement (5) verspannt.

## Beschreibung

Die vorliegende Erfindung bezieht sich auf ein medizinisches, insbesondere zahnärztliches, Handstück und auf ein Verfahren zur Herstellung des Handstückes nach den Oberbegriffen der Ansprüche 1 und 12.

Derartige medizinische, insbesondere zahnärztliche, Handstücke dienen zum Antrieb medizinischer Werkzeuge. Hierzu weisen die Handstücke eine Werkzeugaufnahme zur Aufnahme der Behandlungswerkzeuge in dem Handstück auf. Die Werkzeugaufnahme wird mittels eines vorzugsweise mit Druckgas betriebenen Turbinenantriebs, welcher insbesondere einen im Kopf angeordneten Rotor aufweist, in Rotation versetzt. Vorzugsweise ist der Kopf des Handstücks gewinkelt zu dessen Handstückteil angeordnet, so dass ein zahnärztliches Winkelstück vorliegt. Bei einer derart gewinkelten Anordnung des Handstückkopfes zu dessen Handstückteil, ist das Handstück vorzugsweise zweiteilig ausgebildet und wird mittels eines in dem Handstück liegenden Verbindungsmittels miteinander verbunden.

Ein derartiges medizinisches, insbesondere zahnärztliches, Handstück ist aus der EP 1.157.670 B1 bekannt.

Dieses bekannte Turbinenhandstück umfasst einen Turbinenkopf und eine daran anliegende Handstückhülse sowie Mittel zum Verspannen beider Bauteile. Hierzu weist die Handstückhülse ein Trägerteil auf, welches an dem Turbinenkopf abgewandten Ende der Handstückhülse angeordnet ist. Das Verbindungsmittel, insbesondere eine Spannschraube, erstreckt sich von dem Trägerteil bis zu dem Kopfteil und ist dort jeweils befestigt. Das Trägerteil weist eine Bohrung sowie eine Anlagefläche für die Spannschraube auf. Der Kopfteil ist durch einen Schaftteil gebildet, welcher zur Aufnahme des Kopfes in der Handstückhülse dient. Der Schaft wiederum weist eine Bohrung mit einem Innengewinde zum Befestigen der Spannschraube an dem Kopfteil auf. Mittels Verschrauben der Spannschraube in der Bohrung des Schaftes kann folglich der Kopfteil mit dem Handstückteil über das Trägerteil miteinander verspannt werden.

Als nachteilig dieser Ausgestaltung der Verbindung des Handstückkopfes mit der Handstückhülse des medizinischen Handstücks, insbesondere eines Winkelstücks, erweist sich die Befestigung des Verbindungsmittels, insbesondere der Spannschraube, an dem Instrumentenkopf. Auf Grund der Ausbildung dieser Verbindung als Schraubverbindung ist es notwendig den Schaftteil des Turbinenkopfes als massives Bauteil auszubilden. Dieser Schaftteil weist neben der Bohrung mit einem darin angeordneten Innengewinde zur Aufnahme der Spannschraube weitere Bohrungen zur Versorgung des Turbinenkopfes mit diversen Medien, wie zum Beispiel Sprayluft, Spraywasser oder Licht, und zur Versorgung des im Kopf angeordneten Rotors mit Treibluft, auf. Neben diesen Bohrungen zur Aufnahme der Versorgungsleitungen weist der Schaftteil des Weiteren Durchgangsbohrungen auf, welche zur Rückführung der Treibluft aus der Rotoraufnahme des Turbinenkopfes durch bzw. in das Innere der Handstückhülse dienen. Durch die Ausbildung des Schaftteils als massives Bauteil wird so die Rückführung der Treibluft vom Rotor, insbesondere aus der Rotoraufnahme, lediglich auf die Bohrungen im Schaftteil beschränkt. Dies führt zu einer Reduzierung der Leistung des Turbinenantriebs auf Grund von erzeugten Staudrücken zwischen Rotor und Rotoraufnahme und dem Schaftteil.

Einen weiteren Nachteil der im Stand der Technik bekannten Ausführungsform stellt die Spannschraube als weiteres im Handstück verbautes Bauteil dar. Durch die Anordnung der Spannschraube im Inneren des Handstücks wird der Querschnitt der Rückluftleitung, welche durch das hülsenförmige Handstückteil gebildet ist, neben den Versorgungsleitungen zusätzlich vermindert. Dies führt ebenfalls zu einer Reduzierung der Leistung des Turbinenantriebs auf Grund von erzeugten Staudrücken.

Der vorliegenden Erfindung liegt daher die Aufgabe zugrunde ein medizinisches, insbesondere zahnärztliches Handstück zu schaffen, welches bei einfacher Herstellung die Nachteile des Stand der Technik vermeidet und es insbesondere ermöglicht, die Teile des Handstücks in einfacher und platzsparender Weise zu verbinden.

Gemäß einem Ausführungsbeispiel eines medizinischen, insbesondere zahnärztlichen, Handstücks mit einer Griffhülse, einem Handstückkopf sowie Mittel zum Verspannen der Griffhülse mit dem Handstückkopf mit einem Verbindungselement und einem in der Griffhülse vorgesehenen und mit dem Verbindungselement verbindbaren Spannelement, weist der Handstückkopf ein Kopfgehäuse und eine sich daran anschließende hohle Verbindungshülse zum Verbinden des Handstückkopfes mit der Griffhülse auf, wobei das Verbindungselement ein Treibluftrohr aufweist, welches sich von dem Spannelement bis in den Handstückkopf erstreckt, und das sich in den Handstückkopf erstreckende Ende des Treibluftrohrs einen Außendurchmesser aufweist, welcher größer als der Innendurchmesser der hohlen Verbindungshülse des Handstückkopfes ist, so dass das Treibluftrohr den Handstückkopf kontaktiert oder hintergreift und den Handstückkopf mit der Griffhülse über das in der Griffhülse gegen einen Anschlag gelagerte Spannelement verspannt.

Gemäß einem Ausführungsbeispiel ist das an dem Handstückkopf gegenüberliegende Ende der Griffhülse angeordnete Spannelement als Trägerplatte für zumindest ein in der Griffhülse aufgenommenes Treibluftrohr ausgebildet. Der Handstückkopf selbst besteht aus einem Kopfgehäuse und einer hohlen Verbindungshülse zum Verbinden des Handstückkopfes mit der Griffhülse des Handstücks. Das mittels der Trägerplatte in der Griffhülse aufgenommene Treibluftrohr dient als Verbindungsteil um den Handstückkopf mit der Griffhülse miteinander zu verspannen. Hierfür weist das sich in den Handstückkopf erstreckende Ende des Treibluftrohrs einen Außendurchmesser aufweist, welcher großer als der Innendurchmesser der hohlen Verbindungshülse des Handstückkopfes ist.

Das Treibluftrohr selbst ist vorzugsweise zweiteilig als Düsenstück und Rohrstück ausgebildet, wobei sich das Düsenstück in den Handstückkopf erstreckt. Im Inneren des Düsenstücks sind vorzugsweise mehrere Kanäle angeordnet, welche Treibluft von zumindest einer Einlassöffnung auf vorzugsweise zumindest zwei Auslassöffnungen verteilen. Das die zumindest zwei Auslassöffnungen aufweisende Ende des Düsenstücks bildet einen Teil der zylinderförmigen Rotoraufnahme und ist hierzu insbesondere kreisbogenförmig ausgeformt.

An die Griffhülse des Handstücks schließt sich vorzugsweise eine Kupplungshülse an, wobei die das Treibluftrohr im Handstück aufnehmende Trägerplatte in der Griffhülse oder in der Kupplungshülse angeordnet sein kann.

Der Handstückkopf und die hohle Verbindunghülse umschließen einen gemeinsamen Raum zur Aufnahme eines Turbinenantriebs, insbesondere des Rotors und der Versorgungsleitungen für Treibluft. Das Treibluftrohr dient als Zuführung der Treibluft in die Rotoraufnahme des Kopfgehäuses und die hülsenförmige Verbindungshülse und die Griffhülse des Handstücks als Rückführung der Treibluft.

Um den Handstückkopf mit der Griffhülse über das Treibluftrohr und das Spannelement zu verspannen, weist die hohle Verbindungshülse oder das Kopfgehäuse des Handstückkopfes einen zweiten Durchmesser auf, welcher dem Außendurchmesser des Treibluftrohrs, insbesondere des Düsenstücks, entspricht und zusammen mit dem Innendurchmesser der hohlen Verbindungshülse des Handstückkopfes zumindest eine Anlagefläche für das Treibluftrohr bildet.

Gemäß einem Ausführungsbeispiel umfasst das Spannelement eine Trägerplatte und eine Hohlschraube. Die Hohlschraube, insbesondere eine Schraubenmutter mit einem Innengewinde, greift in ein Gewinde, insbesondere in ein Außengewinde, des Treibluftrohrs und verspannt somit das Treibluftrohr gegen die Trägerplatte, welche wiederum gegen einen Anschlag in der Griffhülse gelagert ist.

Gemäß einem Ausführungsbeispiel ist die Hülsenwand der hohlen Verbindungshülse zumindest mit eine Unterbrechung und/ oder mit zumindest einer Ausnehmung zur Vergrößerung der Rückluftöffnung versehen, um den Staudruck der Rückluft möglichst gering zu halten.

Zur Herstellung des beschrieben medizinischen, insbesondere zahnärztlichen Handstücks, wird das als Verbindungsmittel dienende Treibluftrohr mit einem ersten und einem zweiten Ende, wobei das zweite Ende den Außendurchmesser aufweist, der größer als der Innendurchmesser der hohlen Verbindungshülse des Handstückkopfes ist, zuerst mittels Einführen des ersten Endes des Treibluftrohrs durch die hohle Verbindungshülse und Anlegen des zweiten Endes des Treibluftrohrs an zumindest eine Anlagefläche an dem Handstückkopf im Handstückkopf positioniert. Anschließend wird die Griffhülse des Handstücks auf die Verbindungshülse des Handstückkopfes aufgesetzt. Nach dem Verbinden des Spannelements mit dem Treibluftrohr wird das Spannelement gegen einen Anschlag in der Griffhülse des Handstücks gelagert, wodurch der Handstückkopf mit der Griffhülse des Handstücks verspannt wird.

Das vorliegende medizinische, insbesondere zahnärztliche Handstück, zeichnet sich durch eine Reihe erheblicher Vorteile aus.

Durch die Ausgestaltung des Treibluftrohrs als Verbindungsmittel für den Handstückkopf und der Griffhülse ist kein weiteres Verbindungsmittel für die Verbindung beider Bauteile innerhalb der Griffhülse des Handstücks und somit in der Rückluftleitung notwendig. Dies führt zu keiner Querschnittverkleinerung der Rückluftleitung und folglich zu einer Reduzierung der in der Rückluftleitung entstehenden Staudrücken, wodurch die Leistung des Turbinenantriebs erhöht wird.

Des Weiteren ist am Handstückkopf, vorzugsweise an dessen Verbindungshülse keine Aufnahme, insbesondere kein massiver Schaft mit einer Bohrung für eine Schraubverbindung, notwendig, um das Verbindungsmittel an dem Handstückkopf zu befestigen. Durch das Verspannen des Handstückkopfes mit der Griffhülse des Handstücks mittels des Treibluftrohrs, welches einen Außendurchmesser aufweist, welcher größer als der Innendurchmesser der hohlen Verbindungshülse ist, kann die Verbindungshülse am Handstückkopf hohl ausgebildet werden, wodurch die Öffnung für die vom Rotor abströmende Treibluft am Handstückkopf vergrößert werden kann. Dies führt folglich zu einer Reduzierung der in der Rotoraufnahme des Handstückkopfes entstehenden Staudrücken, wodurch die Leistung des Turbinenantriebs ebenfalls erhöht wird.

Einen weiteren Vorteil der Erfindung bildet die mehrteilige, insbesondere zweiteilige Ausgestaltung des Treibluftrohrs. Durch Ausbildung des Treibluftrohrs als Düsenstück und Rohrstück ist es möglich Bohrungen, insbesondere Treibluftkanäle und Anströmungsöffnungen, welche üblicherweise im Kopfgehäuse und/ oder im Schaftteil des Handstückkopfes angebracht sind, in dem Düsenstück anzubringen. Durch die Anordnung der Kanäle in einem separaten Bauteil können Treibluftkanäle mit mehreren Richtungsänderungen und Abzweigungen gefertigt und in den Handstückkopf integriert werden.

Im Rahmen der Erfindung versteht es sich selbstverständlich, dass das medizinische, insbesondere zahnärztliche Handstück nicht auf gewinkelte Handstücke beschränkt ist. Der Begriff Handstück umfasst vielmehr alle geraden, pistolenförmigen Handstücke als auch Teile von Handstücken mit einer Werkzeugaufnahme zur Aufnahme eines Behandlungswerkzeugs.

Nachfolgend wird die Erfindung in Verbindung mit den beigefügten Zeichnungen erläutert.

Dabei zeigt:
Figur 1 einen Längsschnitt durch ein Ausführungsbeispiel eines medizinischen, insbesondere zahnärztlichen, Handstücks in der Seitenansicht,
Figur 2 einen Längsschnitt durch das medizinische, insbesondere zahnärztliche, Handstück, der Figur 1 in der Draufsicht,
Figur 3 das Treibluftrohr des medizinischen, insbesondere zahnärztlichen, Handstücks der Figur 1,
Figur 4 einen Querschnitt durch das medizinische, insbesondere zahnärztliche, Handstück entlang der Linie Q-Q,
Figur 5 einen Querschnitt durch das medizinische, insbesondere zahnärztliche, Handstück entlang der Linie R-R;

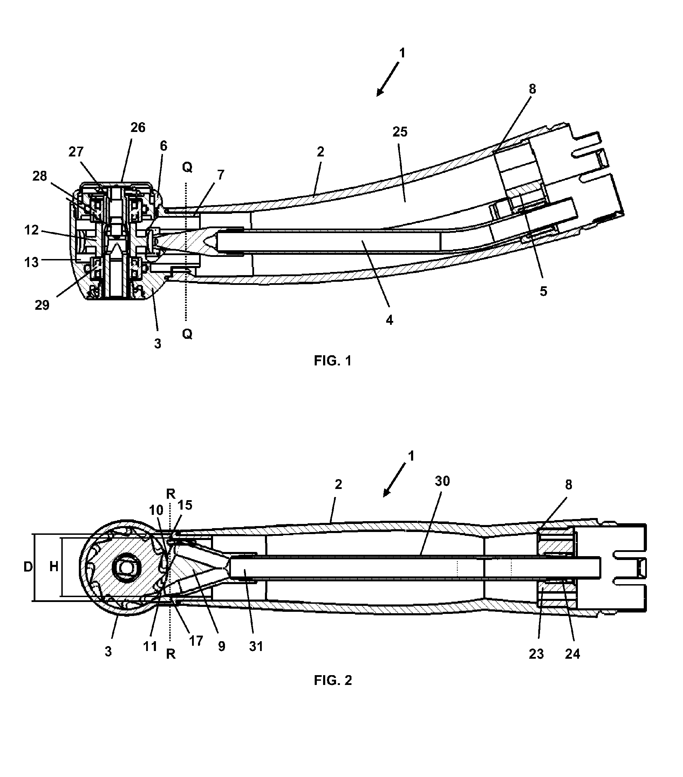

Das in Figur 1 dargestellte medizinische, insbesondere zahnärztliche, Handstück 1 ist als Winkelstück mit einer Griffhülse 2 und einem gewinkelt daran angeordneten Handstückkopf 3 ausgebildet. Der Handstückkopf 3 selbst weist ein Kopfgehäuse 6 und eine hohle Verbindungshülse 7 zur Aufnahme eines Turbinenantriebs, insbesondere eines Rotors 12, in einer im Wesentlichen zylinderförmigen Rotoraufnahme 13 sowie einen Druckknopf 26 zum Betätigen einer Werkzeugaufnahme 27 auf. In der Rotoraufnahme 13 ist der Rotor 12 zusammen mit der Werkzeugaufnahme 27 mittels eines oberen und unteren Lagers 28, 29 drehbar gelagert. In der Griffhülse 2 ist ein Treibluftrohr 4 aufgenommen, welches zur Zuführung der Treibluft auf den Rotor 12 des Turbinenantriebs dient. Das Treibluftrohr 4 selbst ist als Verbindungselement ausgebildet, um zusammen mit dem gegen einen Anschlag 8 gelagerten Spannelement 5, welches gleichzeitig zur Positionierung des Treibluftrohrs 4 in dem Griffstück 2 dient, den Handstückkopf 3 mit der Griffhülse 2 zu verspannen. Der durch die Griffhülse 2 des Handstücks 1 und dem Treibluftrohr 4 gebildete Rückluftkanal 25 dient zur Rückführung der von dem Rotor 12 abströmenden Treibluft.

In Figur 2 ist ein Längsschnitt durch das medizinische, insbesondere zahnärztliche, Handstück 1 in der Draufsicht abgebildet. Das mittels der Trägerplatte 23 in der Griffhülse 2 aufgenommene Treibluftrohr 4 ist vorzugsweise zweiteilig, als Düsenstück 9 und Rohrstück 30, ausgebildet. Hierbei erstreckt sich das Rohrstück 30 von der Trägerplatte 23 bis zu dem Düsenstück 9 und ist mit diesem, vorzugsweise über ein Gewinde, verbunden. Das Düsenstück 9 selbst weist zumindest eine Einlassöffnung 31 für Treibluft und mehrere Auslassöffnungen, insbesondere eine erste und zweite Auslassöffnung 10, 11 auf, welche die Treibluft von dem Rohrstück 30 in die Rotoraufnahme 13, insbesondere auf die Schaufeln des Rotors 12, leiten. Zum Verbinden des Handstückkopfes 3 mit der Griffhülse 2 weist das Treibluftrohr an dem sich in den Handstückkopf 3 erstreckende Ende einen Außendurchmesser D auf, welcher größer als der Innendurchmesser H der hohlen Verbindungshülse 7 des Handstückkopfes 3 ist. Der Rücksprung 17 am Handstückkopf bildet zumindest eine Anlagefläche 15 für das Treibluftrohr 4. Das Verschrauben der an der Trägerplatte 23 anliegenden Hohlschraube 24 auf ein Gewinde an dem Rohrstück 30 des Treibluftrohrs 4 führt zu einer axialen Verschiebung des Treibluftrohrs 4 gegenüber der Trägerplatte 23 bzw. gegenüber der Griffhülse 2 des Handstücks 1, auf Grund der Anlagefläche 8. Folglich wird der Handstückkopf 3 über das Treibluftrohrs 4, mit der Griffhülse verspannt. Die Hohlschraube 24 ist hierzu in einer Führungsbohrung der Trägerplatte 23 aufgenommen. Neben dieser Bohrung weist die Trägerplatte 23 bzw. das Spannelement 5 weitere Bohrungen zur Versorgung des Handstückkopfes 3 mit Medien, wie Sprayluft, Spraywasser oder Licht, und Bohrungen zur Rückführung der von dem Rotor 12 abströmenden Treibluft auf.

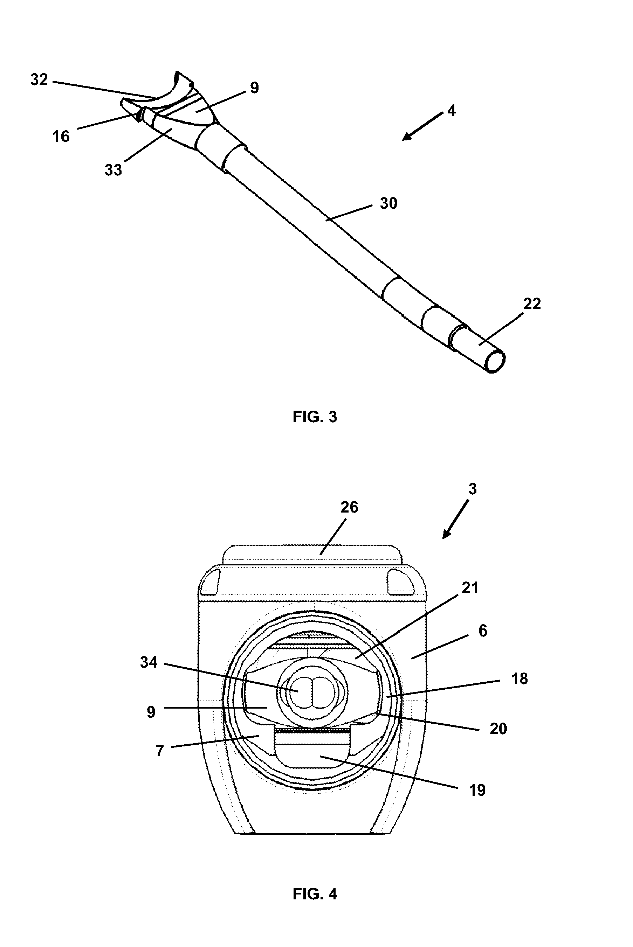

In Figur 3 ist das für den Handstückkopf 3 und Griffhülse 2 als Verbindungsmittel dienende Treibluftrohr 4 gezeigt. Das Treibluftrohr 4 weist an einem ersten Ende, insbesondere an dem freien Ende des Rohrstücks 30, einen Gewindebereich 22 auf. Dieser dient zum Eingriff der Hohlschraube 24. Am zweiten Ende des Treibluftrohrs 4 weist das Düsenstück 9 einen Außendurchmesser D auf, welcher größer als der Innendurchmesser H der hohlen Verbindungshülse des Handstückkopfes 1 ist. Dieses Ende ist vorzugsweise durch einen kreisbogenförmigen Teil 32 ausgebildet, um zusammen mit dem Kopfgehäuse eine im Wesentlichen zylinderförmige Rotoraufnahme 13 zu bilden. Der sich von dem Außendurchmesser D nach hinten in Richtung Rohrstück 30 erstreckende Teil 33 des Düsenstücks ist vorzugsweise verjüngend ausgebildet und weist zumindest einen Vorsprung 16 auf, welcher in den Rücksprung 17 des Handstückkopfes greift.

Figur 4 zeigt einen Querschnitt durch das medizinische, insbesondere zahnärztliche, Handstück 1 entlang der Linie Q-Q. Der das Kopfgehäuse 6 und den Druckknopf 26 umfassende Handstückkopf 3 weist eine sich an das Kopfgehäuse 6 anschließende hohle Verbindungshülse 7 auf. Durch die hohle Verbindungshülse 7 erstreckt sich das Treibluftrohr 4, insbesondere dessen Düsenstück 9, in die Rotoraufnahme 13 des Handstückkopfes 3. Ein Öffnung 21 für die von dem Rotor 12 abströmende Treibluft, welche über das Treibluftrohr 4, insbesondere über das Düsenstück 9 und der mehreren Kanäle 34 im Düsenstück 9, dem Rotor 12 zugeführt wurde, wird durch die hohle Verbindungshülse 7 gebildet. Zur Vergrößerung der Rückluftöffnung 21 weist die Hülsenwand 18 der hohlen Verbindungshülse 7 des Handstückkopfes 3 zumindest eine Unterbrechung 19 und/ oder zumindest eine Ausnehmung 20 auf.

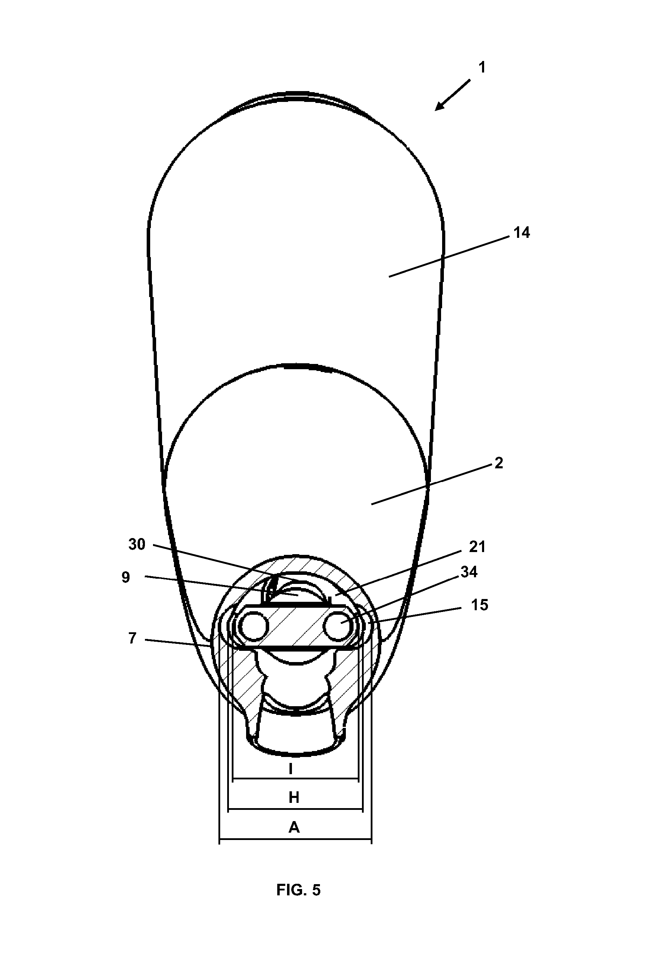

Figur 5 zeigt einen Querschnitt durch das medizinische, insbesondere zahnärztliche, Handstück 1 entlang der Linie R-R. Das durch die Griffhülse 2 im Handstück 1 aufgenommene Treibluftrohr 4 mit einem Rohrstück 30 und einem Düsenstück 9 weist mehrere Kanäle 34 für mehrere Auslassöffnungen der Treibluft in die Rotoraufnahme 13 des Handstückkopfes 3 auf. Der Zwischenraum 21 der durch die hohle Verbindungshülse 7 des Handstückkopfes 3 und des Treibluftrohrs 4 gebildet ist, dient zur Rückführung der Treibluft. Die hohle Verbindungshülse 7 mit einem ersten Innendurchmesser H weist bevorzugt einen zweiten Durchmesser A auf, welcher dem des Außendurchmessers D des Treibluftrohrs 4, insbesondere des zweiten Ende des Düsenstücks 9, entspricht und zusammen mit dem Innendurchmesser H zumindest eine Anlagefläche 15 für das Treibluftrohr 4 bildet. Das Treibluftrohr 4 weist bei diesem Ausführungsbeispiel einen zweiten Durchmesser **I** auf, welcher kleiner als der Innendurchmesser H der hohlen Verbindungshülse des Handstückkopfes ist.

Die Erfindung ist nicht auf das beschriebene Ausführungsbeispiel beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Medizinisches, insbesondere zahnärztliches, Handstück (1), aufweisend eine Griffhülse (2), einen Handstückkopf (3) sowie Mittel zum Verspannen der Griffhülse (2) mit dem Handstückkopf (3) mit einem Verbindungselement (4) und einem in der Griffhülse (2) vorgesehenen und mit dem Verbindungselement (4) verbindbaren Spannelement (5), **dadurch gekennzeichnet, dass** der Handstückkopf (3) ein Kopfgehäuse (6) und eine sich daran anschließende hohle Verbindungshülse (7) zum Verbinden des Handstückkopfes (3) mit der Griffhülse (2) aufweist und dass das Verbindungselement (4) ein Treibluftrohr aufweist, welches sich von dem Spannelement (5) bis in den Handstückkopf (3) erstreckt, wobei das sich in den Handstückkopf (3) erstreckende Ende des Treibluftrohrs (4) einen Außendurchmesser (D) aufweist, welcher größer als der Innendurchmesser (H) der hohlen Verbindungshülse (7) des Handstückkopfes (3) ist, so dass das Treibluftrohr (4) den Handstückkopf (3) kontaktiert und den Handstückkopf (3) mit der Griffhülse (2) über das in der Griffhülse gegen einen Anschlag (8) gelagerte Spannelement (5) verspannt.

2. Medizinisches, insbesondere zahnärztliches, Handstück (1) nach Anspruch 1, **dadurch gekennzeichnet, dass** sich das in den Handstückkopf (3) erstreckende Ende des Treibluftrohrs (4) als Düsenstück (9) ausgebildet ist.

3. Medizinisches, insbesondere zahnärztliches, Handstück (1) nach Anspruch 2, **dadurch gekennzeichnet, dass** das Düsenstück (9) zumindest zwei Auslassöffnungen (10, 11) für Treibluft, welche auf einen im Handstückkopf (3) gelagerten Turbinenantrieb, insbesondere Rotor (12), gerichtet sind, aufweist.

4. Medizinisches, insbesondere zahnärztliches, Handstück (1) nach einem der Ansprüche 2 oder 3, **dadurch gekennzeichnet, dass** sich das in den Handstückkopf (3) erstreckende Ende des Düsenstücks (9) von dem Außendurchmesser (D), welcher größer als der Innendurchmesser (H) der hohlen Verbindungshülse (7) des Handstückkopfes (3) ist, in Richtung des Spannelements (5) verjüngt.

5. Medizinisches, insbesondere zahnärztliches, Handstück (1) nach Anspruch 3 oder 4, **dadurch gekennzeichnet, dass** das Düsenstück (9) an dem zumindest zwei Auslassöffnungen (10, 11) aufweisenden Ende kreisbogenförmig ausgebildet ist, um zusammen mit dem Kopfgehäuse (6) des Handstückkopfes (3) eine im Wesentlichen zylinderförmige Rotoraufnahme (13) zu bilden.

6. Medizinisches, insbesondere zahnärztliches, Handstück (1) nach einem der vorherigen Ansprüche, **dadurch gekennzeichnet, dass** die Griffhülse (2) des Handstücks (1) mit einer Kupplungshülse (14) verbindbar ist, wobei das Treibluftrohr (4) den Handstückkopf (3) mit der Griffhülse (2) über das in der Griffhülse (2) oder in der Kupplungshülse (14) gegen einen Anschlag gelagerte Spannelement (5) verspannt.

7. Medizinisches, insbesondere zahnärztliches, Handstück (1) nach einem der vorherigen Ansprüche, **dadurch gekennzeichnet, dass** an dem Handstückkopf (3) zumindest eine Anlagefläche (15) für das Treibluftrohr (4) und an dem Treibluftrohr (4) zumindest eine Anlagefläche (16) für den Handstückkopf (3) vorgesehen ist.

8. Medizinisches, insbesondere zahnärztliches, Handstück (1) nach Anspruch 7, **dadurch gekennzeichnet, dass** die zumindest eine Anlagefläche (15) am Handstückkopf (3) durch einen Rücksprung (17) gebildet ist, in den die als Vorsprung ausgebildete Anlagefläche (16) des Treibluftrohrs (4) eingreift.

9. Medizinisches, insbesondere zahnärztliches, Handstück (1) nach einem der vorherigen Ansprüche, **dadurch gekennzeichnet, dass** die Hülsenwand (18) der hohlen Verbindungshülse (7) des Handstückkopfes (3) zumindest eine Unterbrechung (19) und/ oder zumindest eine Ausnehmung (20) aufweist, um den Durchmesser der Öffnung (21) der hohlen Verbindungshülse (7) und des darin gelagerten plattenförmigen Düsenstücks (9), welche zur Rückführung der von dem in dem Handstückkopf (3) gelagerten Rotor (12) abströmenden Treibluft dient, zu vergrößern.

10. Medizinisches, insbesondere zahnärztliches, Handstück (1) nach einem der vorherigen Ansprüche, **dadurch gekennzeichnet, dass** das Treibluftrohr (4) an dem Düsenstück (9) gegenüberliegende Ende ein Gewinde (22) aufweist.

11. Medizinisches, insbesondere zahnärztliches, Handstück (1) nach einem der vorherigen Ansprüche, **dadurch gekennzeichnet, dass** das Spannelement (5) aus einer scheibenförmigen gegen einen Anschlag gelagerten Trägerplatte (23) sowie einer mit dem Gewinde (22) des Treibluftrohrs (4) in Eingriff stehenden Hohlschraube (24) gebildet ist.

12. Verfahren zur Herstellung eines Handstücks (1) nach einem der Ansprüche 1 bis 11, **gekennzeichnet durch die Schritte:**
- Zur Verfügung stellen einer Griffhülse (2), eines Handstückkopfes (3) mit einem Kopfgehäuse (6) und einer hohlen Verbindungshülse (7), eines Spannelements (5), sowie eines Treibluftrohrs (4) mit einem ersten und einem zweiten Ende, wobei das zweite Ende einen Außendurchmesser (D) aufweist, der größer als der Innendurchmesser (H) der hohlen Verbindungshülse (7) des Handstückkopfes (3) ist,
- Positionieren des Treibluftrohrs (4) in dem Handstückkopf (3) mittels Einführen des ersten Endes des Treibluftrohrs (4) **durch** die hohle Verbindungshülse (7) und Anlegen des zweiten Ende des Treibluftrohrs (4) an zumindest eine Anlagefläche (15) an dem Handstückkopf (3),
- Aufsetzen der Griffhülse (2) des Handstücks (1) auf die Verbindungshülse (7) des Handstückkopfes (3),
- Verbinden des Spannelements (5) mit dem Treibluftrohr (4) und
- Lagern des Spannelements (5) gegen einen Anschlag (8) in der Griffhülse (2) des Handstücks (1) wodurch der Handstückkopf (3) mit der Griffhülse (2) des Handstücks (1) verspannt wird.

13. Verfahren zur Herstellung eines Handstücks (1) nach Anspruch 12, **dadurch gekennzeichnet, dass** das Spannelement (5) mittels Verschrauben mit dem Treibluftrohr (4) verbunden wird.
